Europäisches Patentamt

European Patent Office

Office européen des brevets

(19)

(11) **EP 0 611 216 B1**

(12) **FASCICULE DE BREVET EUROPEEN**

(45) Date de publication et mention
de la délivrance du brevet:
**28.08.1996 Bulletin 1996/35**

(51) Int Cl.6: **F16F 13/00**, H01F 7/14

(21) Numéro de dépôt: **94400292.2**

(22) Date de dépôt: **10.02.1994**

(54) **Perfectionnements aux dispositifs antivibratoires hydrauliques**

Verbesserungen an hydraulischen Schwingungsdämpfern

Improvements to hydraulic anti-vibration devices

(84) Etats contractants désignés:
**DE GB SE**

(30) Priorité: **12.02.1993 FR 9301605**

(43) Date de publication de la demande:
**17.08.1994 Bulletin 1994/33**

(73) Titulaire: **HUTCHINSON**
**F-75008 Paris (FR)**

(72) Inventeur: **Gennesseaux, André**
**F-28200 Chateaudun (FR)**

(74) Mandataire: **Burbaud, Eric et al**
**Cabinet Plasseraud**
**84, rue d'Amsterdam**
**75440 Paris Cédex 09 (FR)**

(56) Documents cités:
**EP-A- 0 278 824       EP-A- 0 358 538**
**EP-A- 0 479 654       WO-A-91/00641**
**DE-A- 3 218 181       DE-A- 3 508 823**
**FR-A- 2 574 031       GB-A- 1 097 715**
**GB-A- 2 086 660       US-A- 2 950 088**
**US-A- 4 789 143**

• **PATENT ABSTRACTS OF JAPAN vol. 6, no. 32
(E-96) (910) 26 Février 1982 & JP-A-56 150 806
(TOKYO SHIBAURA DENKI KK) 21 Novembre
1981**

## Description

L'invention est relative aux dispositifs antivibratoires hydrauliques destinés à être interposés aux fins d'amortissement et de liaison, voire de support, entre deux éléments rigides tels qu'un châssis de véhicule et que le moteur de ce véhicule.

Elle concerne plus particulièrement, parmi ces dispositifs, ceux qui comportent :

- une armature rigide annulaire d'axe X, généralement vertical ou sensiblement vertical, et un plot rigide coaxial à cette armature, solidarisables respectivement avec les deux éléments rigides à réunir,
- une paroi annulaire en élastomère d'axe X résistant à la compression axiale, interposée entre l'armature et le plot,
- un soufflet flexible et étanche porté par l'armature et délimitant une enceinte avec celle-ci, le plot et la paroi annulaire,
- une cloison rigide intermédiaire portée par l'armature et divisant l'intérieur de l'enceinte en deux chambres, l'une de travail du côté de la paroi et l'autre de compensation du côté du soufflet,
- un passage faisant communiquer les deux chambres entre elles,
- et une masse de liquide remplissant les deux chambres et le passage.

Comme on le sait, avec un tel dispositif, l'application sur l'une des armatures, selon la direction X, d'oscillations de relativement grande amplitude (généralement supérieure à 0,5 mm) et de relativement basse fréquence (généralement de l'ordre de 1 à 40 Hz) a pour effet de refouler le liquide de l'une des deux chambres dans l'autre et inversement à travers le passage étranglé, avec mise en résonance de la masse liquide ainsi refoulée lorsque la fréquence desdites oscillations atteint une valeur prédéterminée $F_0$ qui est fonction du rapport entre la section droite et la longueur axiale du passage étranglé, cette mise en résonance assurant un excellent amortissement des oscillations concernées.

Si la fréquence des oscillations imposées entre les deux armatures diffère de la valeur optimum $F_0$, ces os- cillations sont moins bien amorties que celles à la fré- quence $F_0$.

Or, pour certaines applications, il convient d'obtenir un bon amortissement pour deux valeurs distinctes $F_0$ et $F_1$ de relativement basse fréquence, la première de ces valeurs étant par exemple de l'ordre de 10 Hz et la seconde, de l'ordre de 25 à 30 Hz si les phénomènes générateurs des oscillations à traiter sont respectivement le "hachis" ou secouage du véhicule dû à son roulage sur un sol irrégulier -cas dans lequel il convient d'amortir au maximum les oscillations du châssis du véhicule dues aux secousses ou chocs imposés au moteur-et les vibrations du moteur entraîné au ralenti lorsque le véhicule est arrêté, vibrations qu'il convient d'isoler au maximum du châssis.

Pour rendre possible une maîtrise efficace et alternative de deux phénomènes oscillatoires distincts du genre de ceux qui viennent d'être mentionnés, il a déjà été proposé de rendre "adaptatifs" les dispositifs d'amortissement considérés, et, à cet effet, de monter en parallèle sur le passage d'un tel dispositif un second passage de cotes différentes, propre à relier entre elles, lui aussi, les deux chambres et de prévoir un obturateur rotatif axé sur l'axe X du dispositif et propre à ouvrir ou obturer à volonté ce second passage en fonction notamment de l'état de roulage ou d'arrêt du véhicule.

Dans les modes de réalisation qui ont été proposés à cet effet jusqu'à ce jour, le montage et l'entraînement d'un tel obturateur rotatif sont déjà prévus de façon telle qu'aucun couple ne soit exercé sur celui-ci par la pression hydraulique.

Mais dans les solutions adoptées (voir en particulier les brevets FR-2 574 031 et FR-2 610 054), les moyens d'entraînement de l'obturateur (électro-aimant de révolution autour de l'axe X ou moteur électrique d'axe X) sont relativement encombrants, de sorte que les dispositifs d'amortissement résultants ne peuvent pas être utilisés aux lieux et places des dispositifs classiques du même genre, c'est-à-dire comprenant un seul passage ouvert en permanence.

En d'autres termes, avec les solutions connues, si l'on désire rendre "adaptatif" un dispositif antivibratoire hydraulique d'un type classique, par exemple en vue de lui permettre d'assurer successivement un amortissement optimum du hachis lors de la phase de roulage d'un véhicule, puis une isolation optimum des vibrations de ralenti à l'arrêt, il est nécessaire de surdimensionner ce dispositif.

On ne peut donc plus adopter les outillages habituels de fabrication et de montage de tels dispositifs, et surtout, on ne peut plus les loger dans les espaces dimensionnés avec précision qui étaient réservés entre châssis et moteur pour les dispositifs classiques correspondants.

Il est connu également de faire comprendre aux dispositifs antivibratoires hydrauliques du genre en question un clapet flottant (ou "membrane") monté de façon à pouvoir vibrer avec une amplitude limitée, généralement inférieure à 1 mm, et à présenter l'une de ses faces en liaison avec la chambre de travail (voir le brevet FR- 2 574 031 déjà cité).

La mise en oeuvre de ce clapet, qui assure un effet de découplage vis-à-vis des vibrations de relativement haute fréquence telles que celles engendrées par le fonctionnement du moteur du véhicule, est particulièrement précieuse lorsque le dispositif fonctionne de façon à amortir les oscillations de relativement basse fréquence (hachis).

Mais elle est sans intérêt, et peut même se révéler nuisible, lorsque le dispositif fonctionne de façon à isoler des vibrations de fréquence plus élevée (ralenti).

L'invention a pour but, surtout, de remédier aux différents inconvénients ci-dessus, et plus précisément :

- de rendre "adaptatifs" des dispositifs antivibratoires classiques du genre en question sans augmenter en rien leur encombrement extérieur,
- et de faire bénéficier automatiquement les dispositifs en question d'un effet de "découplage haute fréquence" pour les régimes d'amortissement basse fréquence (hachis), cet effet étant au contraire automatiquement neutralisé pour les régimes d'isolation à fréquence plus élevée (ralenti).

A cet effet, les dispositifs antivibratoires hydrauliques du genre en question selon l'invention comprennent encore un obturateur rotatif admettant pour axe l'axe X du dispositif et propre à ouvrir ou obturer à volonté au moins le passage de plus grande section, une patte en matériau ferromagnétique faisant partie de l'obturateur rotatif et excentrée par rapport à l'axe X, des moyens électromagnétiques logés dans la périphérie de la cloison rigide intermédiaire et agencés de façon à solliciter angulairement la patte dans un sens autour de l'axe X, des moyens élastiques sollicitant angulairement ladite patte dans le sens inverse du précédent et des lumières évidées dans l'obturateur rotatif et propres à coopérer avec des lumières évidées dans la cloison intermédiaire de façon à mettre en communication l'ensemble des deux chambres avec un clapet de découplage centré sur l'axe X et monté mobile dans la cloison intermédiaire, et ils sont essentiellement caractérisés en ce que les moyens électromagnétiques comprennent deux petits électro-aimants excentrés par rapport à l'axe X et deux circuits magnétiques qui se referment dans la patte à travers respectivement deux entrefers angulairement disposés de part et d'autre de cette patte, en ce que les moyens élastiques sont agencés de façon à solliciter constamment la patte vers une position angulaire médiane pour laquelle les épaisseurs des deux entrefers sont égales, et en ce que les lumières évidées dans l'obturateur sont disposées de façon telle que la communication ci-dessus avec le clapet de découplage soit établie lors de l'obturation du plus gros passage étranglé et au contraire interrompue lors du dégagement de ce passage.

Dans des modes de réalisation avantageux, on a recours en outre à l'une et/ou à l'autre des dispositions suivantes :

- la paroi annulaire présente une allure générale tronconique,
- les deux électro-aimants sont juxtaposés angulairement l'un contre l'autre avec interposition d'une plaquette en matériau ferromagnétique et l'extrémité de chaque électro-aimant la plus éloignée de l'autre est juxtaposée à une plaquette d'extrémité en matériau ferromagnétique légèrement débordante de façon telle que l'ensemble de ces électro-aimants et plaquettes forme un U chevauchant la patte, les entrefers étant localisés entre cette patte et les jambes de l'U, matérialisées par les portions débordantes des plaquettes d'extrémité,
- l'obturateur rotatif est un disque prolongé à sa périphérie par un rebord cylindrique comportant au moins un volet propre à défiler en regard de l'embouchure d'un passage étranglé évidé dans la périphérie de la cloison intermédiaire, et la patte en matériau ferromagnétique est constituée par une sorte de tuile cylindrique rapportée sur le bord du disque,
- l'obturateur rotatif est un disque évidé par au moins une lumière propre à défiler en regard de l'embouchure d'un passage étranglé et la patte en matériau ferromagnétique est un prolongement radial plat de ci disque en forme de secteur circulaire,
- l'étendue angulaire de la patte selon l'ur quelconque des trois alinéas précédents est comprise entre 60 et 90°,
- l'ensemble des moyens électromagnétiques est localisé entre deux cylindres de révolution d'axe X dont les diamètres respectifs sont compris entre 40 et 80 mm et entre 80 et 120 mm,
- les bobines des deux électro-aimants sont montées en série respectivement avec deux redresseurs et leur alimentation électrique est effectuée à partir d'une source de courant continu à travers un double inverseur.

L'invention comprend, mises à part ces dispositions principales, certaines autres dispositions qui s'utilisent de préférence en même temps et dont il sera plus explicitement question ci-après.

Dans ce qui suit, l'on va décrire quelques modes de réalisation préférés de l'invention en se référant aux dessins ci-annexés d'une manière bien entendu non limitative.

Les figures 1 et 2, de ces dessins, montrent respectivement en coupe axiale selon I-I, figure 2, et en coupe transversale selon II-II, figure 1, un dispositif antivibratoire hydraulique établi selon l'invention.

La figure 3 montre schématiquement en coupe transversale partielle une variante d'un tel dispositif également conforme à l'invention.

La figure 4 est une autre variante de la figure 3, encore établie conformément à l'invention.

La figure 5 est une coupe développée de la figure 4 selon la surface cylindrique V-V.

La figure 6 est un schéma d'alimentation électrique susceptible d'être adopté avec avantage selon l'invention.

D'une façon connue en soi, le dispositif antivibratoire hydraulique comprend dans chaque cas :

- une cuvette rigide circulaire 1 d'axe vertical X équipée d'un goujon de fixation 2 en attente orienté vers le bas,

- un plot rigide 3 coaxial à la cuvette 1 et équipé d'un goujon de fixation 4 en attente orienté vers le haut,
- une paroi annulaire en élastomère 5 d'axe X d'allure générale tronconique, résistant à la compression axiale, interposée entre la cuvette 1 et le plot 3,
- un soufflet circulaire flexible et étanche 6 dont le bord est solidarisé avec le bord de la cuvette 1 et qui délimite une enceinte avec ce bord, la paroi annulaire 5 et le plot 3,
- une cloison rigide intermédiaire 7 dont la périphérie est également liée au bord de la cuvette 1 et qui divise l'intérieur de l'enceinte ci-dessus en deux chambres, l'une de travail A du côté de la paroi 5 et l'autre de compensation B du côté du soufflet 6,
- un passage étranglé 8 faisant communiquer entre elles les deux chambres A et B,
- et une masse de liquide remplissant les deux chambres A et B ainsi que le passage étranglé 8.

Les organes de fixation 2 et 4 sont destinés à solidariser respectivement la cuvette 1 et le plot 3 avec des éléments ou ensembles rigides entre lesquels on désire disposer un support ou guide amortisseur : il s'agit notamment du châssis d'un véhicule et du moteur à combustion interne de ce véhicule.

L'assemblage étanche mutuel de la grande base de la paroi annulaire 5 en élastomère, du bord de la cloison intermédiaire 7 et du bord du soufflet 6 sur un bord rabattu horizontalement vers l'extérieur de la cuvette 1 est assuré par sertissage du bord inférieur d'une virole métallique 9 dont le bord supérieur, incurvé et rabattu vers l'intérieur et vers le bas, est noyé dans ladite grande base.

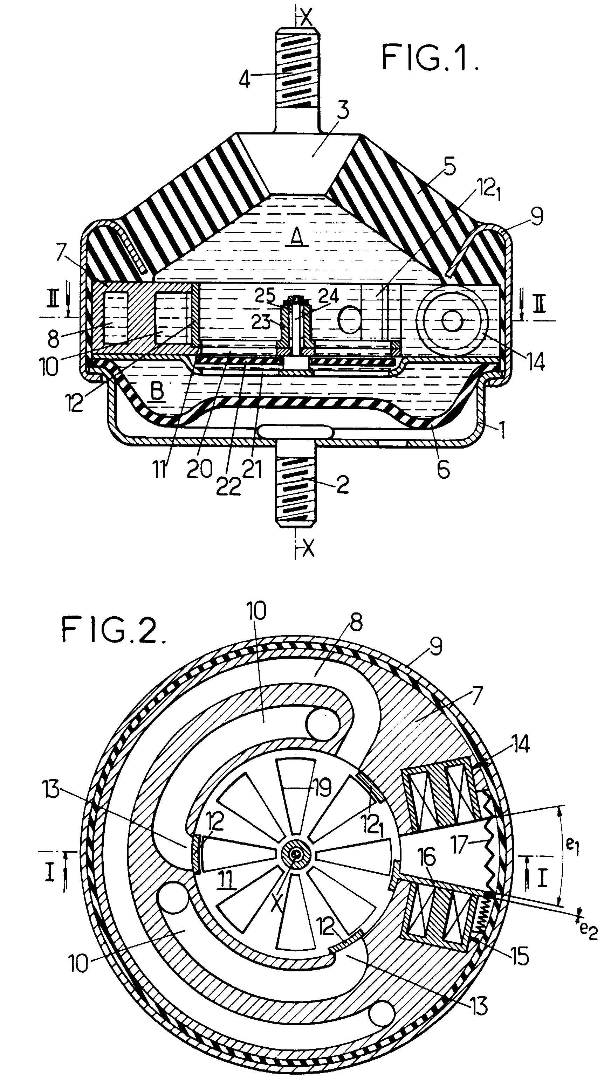

Le canal étranglé 8 est évidé dans la périphérie de la cloison intermédiaire 7 et comprend un tronçon en arc de cercle s'étendant sur un peu plus de 180° (voir figure 2) ainsi que de raccords terminaux radiaux.

On fait comprendre en outre au dispositif considéré un second passage étranglé 10 monté en parallèle sur le passage étranglé 8 -appelé "premier passage" ci-après-et reliant comme celui-ci les deux chambres A et B entre elles.

Ce second passage 10 est ici constitué par deux tronçons de longueurs et sections identiques montés en parallèle l'un sur l'autre et chacun de ces deux tronçons est à la fois plus gros et plus court que le passage 8.

En raison du choix de ces cotes,

- l'utilisation exclusive du premier passage étranglé 8 pour relier les deux chambres A et B permet au dispositif d'amortir des oscillations de relativement basse fréquence $F_0$, telles que celles de hachis explicitées ci-dessus,
- l'utilisation exclusive du second passage étranglé 10 -ou l'utilisation simultanée des deux passages 8 et 10, ce qui revient pratiquement au même- pour relier entre elles les deux chambres A et B permet au dispositif d'isoler des oscillations correspondant

à une fréquence $F_1$ encore basse, mais un peu plus élevée que la précédente $F_0$, telle que celle de ralenti explicitée ci-dessus.

Pour adapter le support au premier mode de fonctionnement, il suffit d'obturer le second passage étranglé 10 en libérant le premier 8 et, pour l'adapter au second mode, il suffit de libérer le second passage 10, le premier 8 pouvant alors être obturé ou non.

En d'autres termes, pour passer de l'un à l'autre des deux modes de fonctionnement ci-dessus décrits, il suffit d'obturer ou libérer le second passage étranglé 10.

A cet effet, l'on a recours à un obturateur rotatif 11 d'axe X agencé de façon à se déplacer au sein du liquide avec le minimum d'effort.

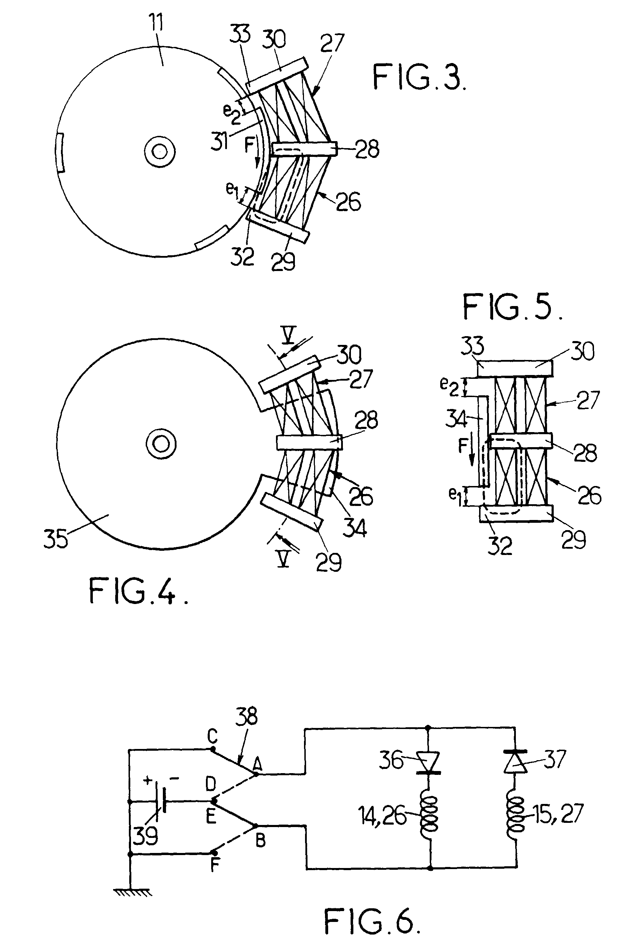

En particulier, la portion 12, de cet obturateur 11, destinée à être placée en regard de l'embouchure à contrôler 13 du second passage étranglé 10, est conformée de façon telle que la pression du liquide exercée sur elle n'applique aucun couple sur l'obturateur, cette pression étant orientée soit vers l'axe X (cas des figures 1 et 2), soit parallèlement à cet axe X (cas de la figure 4).

On prévoit en outre des moyens pour commander les rotations de l'obturateur 11, de préférence automatiquement.

C'est essentiellement sur ces moyens d'entraînement que porte la présente invention, l'un des principaux buts de celle-ci étant de réduire leurs dimensions au point de pouvoir les fondre intégralement dans l'encombrement global habituel des dispositifs comparables comportant un passage étranglé unique ouvert en permanence.

A cet effet, on fait comporter auxdits moyens d'entraînement de l'obturateur rotatif une paire d'électro-aimants et non plus un solénoïde unique d'axe X comme dans certaines réalisations connues, ces deux électro-aimants étant agencés de façon à solliciter angulairement dans deux sens contraires une armature magnétique excentrée solidaire de l'obturateur, et ce de part et d'autre d'une position neutre moyenne vers laquelle cette armature est constamment sollicitée par des moyens élastiques appropriés.

Ce recours à deux électro-aimants est a priori surprenant, car il semble plus judicieux d'utiliser un électro-aimant unique que deux si l'on désire réduire l'encombrement global du dispositif "adaptatif" considéré.

L'explication de cette mesure est la suivante.

La caractéristique force/courant d'un électro-aimant diffère fortement d'une caractéristique linéaire.

Si en effet on appelle f la force d'attraction exercée par un électro-aimant sur une pièce ou "armature" magnétique disposée à une distance d de sa face frontale, et si l'on désigne par i l'intensité du courant électrique d'alimentation de cet électro-aimant, ladite force f est proportionnelle à $(\frac{i}{d})^2$.

Dans le cas présent, la tension continue de l'alimentation, qui est en particulier celle de 12 Volts de la batterie du véhicule considéré, est constante et il en est donc de même du courant i d'alimentation.

Dans ces conditions, la force f est inversement proportionnelle au carré de la distance d.

Si donc on utilise un électro-aimant unique pour commander un déplacement de valeur donnée d'une armature à l'encontre de la force de rappel d'un ressort, cet électro-aimant doit être dimensionné de façon à pouvoir exercer son effort d'attraction même pour la distance d'écartement maximum de l'armature à attirer : l'électro-aimant résultant est alors très encombrant.

Mais si on utilise deux électro-aimants, chacun d'eux peut être extrêmement petit, car il n'a besoin d'engendrer que la force d'attraction correspondant à une course de l'armature deux fois plus petite que dans le cas précédent, force qui est donc quatre fois plus faible que précédemment.

Il est à noter également qu'il n'est plus besoin ici de vaincre une force élastique de rappel importante puisqu'il est uniquement nécessaire ici de solliciter élastiquement l'armature vers une position neutre moyenne, chaque électro-aimant étant désexcité lorsque l'autre est excité.

Les deux électro-aimants considérés dans le cas de la réalisation des figures 1 et 2 sont désignés par les références 14 et 15.

Ils sont tous les deux disposés dans la portion périphérique de la cloison intermédiaire 7 et angulairement de part et d'autre d'une palette 16 en matériau ferromagnétique solidaire de l'obturateur 11 et prolongeant celui-ci vers l'extérieur, ce qui définit deux entrefers $e_1$ et $e_2$ disposés angulairement de part et d'autre de ladite palette.

La sollicitation élastique de cette palette 16 vers sa position de repos médiane, disposée à mi-distance des deux électro-aimants 14 et 15, est assurée à l'aide d'un petit ressort hélicoïdal de traction 17 : comme bien visible sur la figure 2, le point milieu de ce ressort 17 est accroché sur ladite palette 16 et ses deux extrémités sont accrochées respectivement sur deux points de la cloison rigide 7.

Le fonctionnement du dispositif "adaptatif" qui vient d'être décrit est le suivant.

Au repos, c'est-à-dire tant que le contact électrique n'est pas mis sur le véhicule considéré, la palette 16 se trouve en sa position angulaire médiane, étant ramenée vers cette position par le relativement faible effort rappel du ressort 17.

Dès le démarrage du moteur, l'électro-aimant 14 est excité, et lui seul, et la palette 16 est attirée par lui et appliquée contre lui.

L'obturateur 11 libère alors le second passage étranglé 10 et obture en outre éventuellement le premier passage étranglé 8, bien que ce ne soit pas indispensable.

Ce sont alors les vibrations de ralenti qui sont maîtrisées de façon optimum.

Si ensuite le véhicule démarre et se met à rouler, il n'est plus besoin de maîtriser les vibrations de ralenti, mais les oscillations de hachis.

L'excitation électrique est alors automatiquement supprimée sur l'électro-aimant 14 et appliquée sur l'électro-aimant 15.

La palette 16 est alors ramenée dans un premier temps jusqu'à sa position médiane par l'effort de rappel du ressort 17, puis, à partir de cette position, elle est attirée par la force magnétique de l'électro-aimant 15 et appliquée sur celui-ci comme visible sur la figure 2.

Le second passage étranglé 10 est alors obturé par les volets 12 alors que le passage étranglé 8 est totalement dégagé.

Le dispositif amortit alors de façon optimum les oscillations de hachis en question.

Comme visible en outre sur les figures 1 et 2, pour la position de l'obturateur rotatif 11 correspondant à ce dernier mode de fonctionnement, des lumières 19 en forme d'éventail ou de secteurs circulaires évidées dans cet obturateur 11 se trouvent alors en regard de lumières identiques 20 et 21 évidées dans une double plaque constitutive de la portion centrale de la cloison intermédiaire 7, double plaque contenant une rondelle flottante ou "clapet" 22 propre à assurer, d'une façon bien connue en elle-même, un effet de découplage vis-à-vis des vibrations de relativement haute fréquence engendrées par le fonctionnement du moteur du véhicule.

Au contraire, ledit clapet de découplage 22 est totalement neutralisé, par fermeture des lumières 20 à l'aide de l'obturateur 11, pour le premier mode de fonctionnement décrit ci-dessus (isolation vis-à-vis des vibrations de ralenti).

Quand, à la fin de chaque phase de roulage, le véhicule s'arrête à nouveau, on observe une permutation des excitations des deux électro-aimants 14 et 15 inverse de la précédente : en d'autres termes, l'électro-aimant 14 est à nouveau excité alors que l'électro-aimant 15 est désexcité, la palette 16 est appliquée contre ledit électro-aimant 14 et le dispositif fonctionne à nouveau de manière à isoler le châssis du véhicule vis-à-vis des vibrations de ralenti du moteur.

Les permutations d'excitation en question peuvent être rendues automatiques, étant par exemple asservies aux variations d'un paramètre lié à la vitesse du véhicule et élaboré par un dispositif tachymétrique approprié.

Comme on le voit sur les figures 1 et 2,

- l'obturateur rotatif 11 se présente sous la forme d'un disque perforé par les ouvertures 19 et prolongé à sa périphérie par des tuiles cylindriques s'étendant parallèlement à l'axe X, constituant les volets d'obturation 12,

- l'un de ces volets, désigné par la référence $12_1$, est utilisé pour obturer le premier passage étranglé 8 pour la position angulaire, de l'obturateur 11, correspondant à l'ouverture du second passage étranglé 10,

- le disque 11 comprend en son centre un palier 23 monté pivotant, avec interposition de bagues 24 à faible coefficient de frottement, par exemple en polytétrafluoroéthylène, autour d'un tourillon central 25 d'axe X planté au centre de la cloison intermédiaire 7.

Comme la palette 16 est appelée à se déplacer au sein d'une masse liquide, il convient de lui donner une forme telle que les volumes de liquide refoulés par ces déplacements soient relativement faibles.

C'est le cas des deux variantes schématisées respectivement sur la figure 3 et sur les figures 4 et 5.

Dans chacune de ces deux variantes, les deux électro-aimants, ici désignés par les références 26 et 27, sont juxtaposés angulairement, par rapport à l'axe X, le long d'un arc de cercle centré sur cet axe, avec interposition d'une plaquette 28 en matériau ferromagnétique, les extrémités, des deux électro-aimants, les plus éloignées de la plaquette intermédiaire 28 étant elles-mêmes juxtaposées contre des plaquettes en matériau ferromagnétique 29 et 30 qui sont débordantes au sens exposé ci-après.

L'ensemble composé par les deux électro-aimants 26 et 27 et les trois plaquettes 28, 29 et 30 forme une structure fixe en U qui enveloppe une patte 31 en matériau ferromagnétique solidaire de l'obturateur 11, avec interposition d'entrefers $e_1$ et $e_2$ entre les extrémités angulaires de cette patte 31 et les portions débordantes ou talons 32, 33 des plaquettes 29 et 30.

Dans le mode de réalisation de la figure 3, la patte 31 se présente sous la forme d'une tuile cylindrique du même genre que les tuiles 12 ci-dessus, mais d'une plus grande étendue angulaire et d'une constitution ferromagnétique et l'ensemble 26-30 est disposé radialement à l'extérieur de ladite patte.

On a représenté en tirets sur la figure 3 le circuit suivi par le champ magnétique engendré par l'excitation de l'électro-aimant 26, excitation qui a pour effet de solliciter angulairement la patte 31 dans le sens de la flèche F et donc de réduire l'épaisseur de l'entrefer $e_1$ jusqu'à son annulation par butée de la patte 31 contre le talon 33 en regard.

Bien entendu, ici encore, un ressort (non représenté) sollicite constamment la patte 31 vers sa position angulaire médiane entre les deux talons 32 et 33 et l'excitation électrique de l'électro-aimant 27 a pour effet de solliciter la patte 31 dans le sens inverse du précédent.

Dans le mode de réalisation des figures 4 et 5, la patte en matériau ferromagnétique est constituée par un prolongement radial plat 34 en forme de secteur circulaire d'un disque plat constitutif de l'obturateur ici désigné par la référence 35, et l'ensemble en U composé par les deux électro-aimants 26, 27 et les trois plaquettes 28, 29 et 31 est agencé de façon à coiffer axialement la patte 34, cet ensemble s'étendant selon arc de cercle centré sur l'axe X ainsi que bien visible sur la figure 4.

Ici encore, on retrouve un fonctionnement identique à celui qui vient d'être décrit ci-dessus en référence aux entrefers $e_1$, $e_2$, à la flèche F et aux talons 32 et 33.

Dans cette dernière variante, les passages étranglés à obturer sélectivement débouchent axialement sur l'une des faces planes du disque 35 et celui-ci est directement ajouré par des lumières susceptibles d'être mises en regard desdites embouchures pour l'une des positions angulaires extrêmes de la patte 34 et pour l'une seulement de ces deux positions.

D'autres aménagements peuvent être prévus pour faciliter les déplacements de la patte 34 dans les entrefers $e_1$ et $e_2$, par exemple en conférant un profil particulier, notamment en forme de pointe, aux tranches, de cette patte 34, qui délimitent lesdits entrefers ainsi qu'aux talons 32 et 33 susceptibles de coopérer avec ces tranches.

En suite de quoi, et quel que soit le mode de réalisation adopté, on dispose finalement d'un dispositif antivibratoire hydraulique de type adaptatif dont la constitution et le fonctionnement résultent suffisamment de ce qui précède.

Ce dispositif adaptatif présente par rapport à ceux antérieurement connus les deux importants avantages suivants :

- il n'est pas plus encombrant que les dispositifs comparables classiques d'un type non adaptatif,
- il met en oeuvre un effet de "découplage haute fréquence" aux instants où un tel effet est bénéfique, cet effet étant automatiquement neutralisé aux autres instants.

Le premier de ces deux avantages résulte du fait que l'ensemble des deux électro-aimants peut être intégralement logé dans une portion de l'anneau périphérique constituant habituellement la portion extérieure de la cloison rigide intermédiaire 7, portion dans laquelle sont évidés les passages étranglés.

Pour fixer les idées, et à titre purement illustratif et bien entendu non limitatif de l'invention, l'anneau en question est délimité par un cylindre intérieur de révolution de diamètre compris entre 40 et 80 mm et par un cylindre extérieur de révolution de diamètre compris entre 80 et 120 mm.

Pour ce qui est de l'excitation des deux bobines 14, 15 ou 26, 27, on a recours avantageusement au schéma donné à la figure 6.

Selon ce schéma, chacune des deux bobines 14, 26 ou 15, 27 est montée en série avec un redresseur 36, 37 (diode ou autre), les sens de conduction des deux redresseurs étant inversés et les deux ensembles composés respectivement par une bobine et le redresseur monté en série sur elle sont montés en parallèle entre les bornes communes A et B d'un inverseur double 38 dont les autres bornes C, D, E et F sont reliées deux à deux, mais selon des ordres inversés, aux deux pôles d'une source de courant continu 39 qui est par exemple la batterie du véhicule concerné.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes.

## Revendications

1. Dispositif antivibratoire hydraulique comportant une armature rigide annulaire (1) d'axe X, un plot rigide (3) coaxial à cette armature, une paroi annulaire en élastomère (5) d'axe X résistant à la compression axiale, interposée entre l'armature et le plot, un soufflet flexible et étanche (6) porté par l'armature et délimitant une enceinte avec celle-ci, le plot et la paroi annulaire, une cloison rigide intermédiaire (7) portée par l'armature et divisant l'intérieur de l'enceinte en deux chambres, l'une de travail (A) du côté de la paroi et l'autre de compensation (B) du côté du soufflet, deux passages (8 et 10) de sections différentes faisant communiquer les deux chambres entre elles, une masse de liquide remplissant les deux chambres et les passages, un obturateur rotatif (11) d'axe X propre à ouvrir ou obturer à volonté au moins le passage de plus grande section (10), une patte en matériau ferromagnétique (16,31,34) faisant partie de l'obturateur rotatif et excentrée par rapport à l'axe X, des moyens électromagnétiques logés dans la périphérie de la cloison rigide intermédiaire (7) et agencés de façon à solliciter angulairement la patte dans un sens autour de l'axe X, des moyens élastiques (17) sollicitant angulairement ladite patte dans le sens inverse du précédent, et des lumières (19) évidées dans l'obturateur rotatif et propres à coopérer avec des lumières (20,21) évidées dans la cloison intermédiaire de façon à mettre en communication l'ensemble des deux chambres avec un clapet de découplage (22) centré sur l'axe X et monté mobile dans la cloison intermédiaire, caractérisé en ce que les moyens électromagnétiques comprennent deux petits électro-aimants (14,26;15,27) excentrés par rapport à l'axe X et deux circuits magnétiques qui se referment dans la patte (16,31,34) à travers respectivement deux entrefers $(e_1,e_2)$ angulairement disposés de part et d'autre de cette patte, en ce que les moyens élastiques (17) sont agencés de façon à solliciter constamment la patte vers une position angulaire médiane pour laquelle les épaisseurs des deux entrefers sont égales, et en ce que les lumières (19) évidées dans l'obturateur sont disposées de façon telle que la communication ci-dessus avec le clapet de découplage (22) soit établie lors de l'obturation du plus gros passage étranglé et au contraire interrompue lors du dégagement de ce passage.

2. Dispositif selon la revendication 1, caractérisé en ce que la paroi annulaire (5) présente une allure générale tronconique.

3. Dispositif selon l'une quelconque des revendications 1 et 2, caractérisé en ce que les deux électro-aimants (26,27) sont juxtaposés angulairement l'un contre l'autre avec interposition d'une plaquette en matériau ferromagnétique (28) et en ce que l'extrémité de chaque électro-aimant la plus éloignée de l'autre est juxtaposée à une plaquette d'extrémité en matériau ferromagnétique (29,30) légèrement débordante de façon telle que l'ensemble de ces électro-aimants et plaquettes forme un U chevauchant la patte (31,34), les entrefers étant localisés entre cette patte et les jambes de l'U, matérialisées par les portions débordantes (32,33) des plaquettes d'extrémité.

4. Dispositif selon la revendication 3, caractérisé en ce que l'obturateur rotatif (11) est un disque prolongé à sa périphérie par un rebord cylindrique comportant au moins un volet $(12,12_1)$ propre à défiler en regard de l'embouchure (13) d'un passage étranglé (8,10) évidé dans la périphérie de la cloison intermédiaire (7), et en ce que la patte en matériau ferromagnétique est constituée par une sorte de tuile cylindrique (31) rapportée sur le bord du disque.

5. Dispositif selon la revendication 3, caractérisé en ce que l'obturateur rotatif est un disque (35) évidé par au moins une lumière propre à défiler en regard de l'embouchure d'un passage étranglé et en ce que la patte en matériau ferromagnétique est un prolongement radial plat (34) de ce disque en forme de secteur circulaire.

6. Dispositif selon l'une quelconque des revendications 3 à 5, caractérisé en ce que l'étendue angulaire de la patte (31,34) est comprise entre 60 et 90°.

7. Dispositif selon l'une quelconque des précédentes revendications, caractérisé en ce que l'ensemble des moyens électromagnétiques est localisé entre deux cylindres de révolution d'axe X dont les diamètres respectifs sont compris entre 40 et 80 mm et entre 80 et 120 mm.

8. Dispositif selon l'une quelconque des précédentes revendications, caractérisé en ce que les bobines des deux électro-aimants (14,26;15,27) sont montées en série respectivement avec deux redresseurs (36,37) et en ce que leur alimentation électrique est effectuée à partir d'une source de courant continu (39) à travers un double inverseur (38).

**Patentansprüche**

1. Hydraulische Vorrichtung zur Schwingungsdämpfung, enthaltend eine starre ringförmige Struktur (1) mit der Achse X, eine starre Klemme (3), die zu dieser Struktur koaxial ausgerichtet ist, eine ringförmige Seitenwand (5) aus elastomerem Material mit der Achse X, die einem axialen Druck entgegenwirkt und zwischen der Struktur und der Klemme angebracht ist, einen flexiblen, dichtenden Einsatz (6), der von der Struktur getragen wird und zusammen mit dieser, der Klemme und der ringförmigen Seitenwand einen Raum begrenzt, eine starre Zwischenwand (7), die von der Struktur getragen wird und das Innere dieses Raums in zwei Kammern unterteilt, und zwar in eine Arbeitskammer (A) auf der zur Seitenwand hin liegenden Seite und eine Kompensationskammer (B) auf der dem Einsatz zugewandten Seite, zwei Durchgänge (8, 10) mit unterschiedlichem Querschnitt, die die beiden Kammern miteinander verbinden, eine flüssige Masse, die die beiden Kammern und die Durchgänge ausfüllt, ein drehbares Dichtungselement (11) mit der Achse X, mit dessen Hilfe nach Wunsch wenigstens der Durchgang mit dem größeren Querschnitt (10) geöffnet bzw. verschlossen werden kann, eine Lasche aus ferromagnetischem Material (16, 31, 34), die einen Bestandteil des drehbaren Dichtungselements darstellt und exzentrisch zur Achse X angeordnet ist, elektromagnetische Mittel, die im Umfangsbereich der starren Zwischenwand (7) vorgesehen und so angeordnet sind, daß sie die Lasche winklig um die Achse X bewegen können, elastische Mittel (17), die die Lasche winklig in entgegengesetzter Richtung bewegen, Durchgangsöffnungen (19), die in dem drehbaren Dichtungselement vorgesehen sind und mit Durchgangsöffnungen (20, 21) in der Zwischenwand zusammenwirken können, um die beiden Kammern mit einem Entkopplungs-Klappenventil (22) zu verbinden, das auf der Achse X zentriert und beweglich in der Zwischenwand angebracht ist, dadurch gekennzeichnet, daß die elektromagnetischen Mittel zwei kleine Elektromagneten (14, 26; 15, 27) umfassen, die exzentrisch zur Achse X angeordnet sind, sowie zwei magnetische Schaltkreise, die sich in der Lasche (16, 31, 34) über zwei beiderseits dieser Lasche angeordnete, zugehörige Luftspalte ($e_1$, $e_2$) hinweg schließen, daß die elastischen Mittel (17) derart ausgerichtet sind, daß sie die Lasche ständig in eine mittlere Winkellage bewegen, in der die beiden Luftspalte gleich groß sind und in der die im Dichtungselement vorgesehenen Durchgangsöffnungen (19) so ausgerichtet sind, daß über sie die Verbindung mit dem Entkopplungs-Klappenventil (22) hergestellt wird, sobald der größere verengte Durchgang versperrt ist, bzw. diese Verbindung unterbrochen wird, sobald dieser Durchgang freigegeben wird.

2. Vorrichtung nach Anspruch 1, dadurch gekennzeichnet, daß die ringförmige Seitenwand (5) im wesentlichen kegelstumpfförmig verläuft.

3. Vorrichtung nach Anspruch 1 oder 2, , dadurch gekennzeichnet, daß sich die beiden Elektromagneten (26, 27) im Winkel zueinander gegenüberliegen und zwischen ihnen ein Plättchen (28) aus ferromagnetischem Material angeordnet ist, und dadurch, daß die vom anderen Elektromagneten am weitesten entfernte Seite jedes Elektromagneten an einem leicht überstehenden Endplättchen (29, 30) aus ferromagnetischem Material anliegt, so daß diese Elektromagneten und Plättchen zusammen eine U-förmige Anordnung bilden, welche die Lasche (31, 34) überschneidet, wobei sich die Luftspalten zwischen dieser Lasche und den beiden von den überstehenden Bereichen (32, 33) der Endplättchen gebildeten Armen der U-förmigen Anordnung befinden.

4. Vorrichtung nach Anspruch 3, dadurch gekennzeichnet, daß das drehbare Dichtungselement (11) eine Scheibe ist, welche an ihrem Rand durch eine Verlängerung in Form eines zylindrischen Vorsprungs aufweist, der wengistens eine Klappe (12, $12_1$) trägt, die sich an der Einmündung (13) eines im Umfangsbereich der Zwischenwand (7) vorgesehenen, verengten Durchgangs (8, 10) vorbeibewegen kann, und dadurch, daß die Lasche aus ferromagnetischem Material aus einer Art zylindrischem Block (31) besteht, der auf dem Rand der Scheibe angebracht ist.

5. Vorrichtung nach Anspruch 3, dadurch gekennzeichnet, daß das drehbare Dichtungselement eine Scheibe (35) ist, welche wenigstens eine Durchgangsöffnung aufweist, die an der Einmündung eines verengten Durchgangs vorbeibewegt werden kann, und dadurch, daß die Lasche aus ferromagnetischem Material eine flache, radiale Verlängerung (34) dieser Scheibe in Form eines Kreissegments darstellt.

6. Vorrichtung nach einem der Ansprüche 3 bis 5, dadurch gekennzeichnet, daß die Lasche (31, 34) in ihrer Ausdehnung einen Winkel zwischen 60 und 90° überspannt.

7. Vorrichtung nach einem der vorangegangenen Ansprüche, dadurch gekennzeichnet, daß die Anordnung aus den elektromagnetischen Mitteln sich zwischen zwei Drehzylindern mit der Achse X befindet, deren jeweilige Durchmesser zwischen 40 und 80 mm bzw. zwischen 80 und 120 mm betragen.

8. Vorrichtung nach einem der vorangegangenen Ansprüche, dadurch gekennzeichnet, daß die Spulen der beiden Elektromagnete (14, 26; 15, 27) mit zwei Gleichrichtern (36, 37) in Reihe geschaltet sind, und daß sie von einer Gleichstromquelle (39) über ein Doppelumpolelement (38) mit Strom versorgt werden.

**Claims**

1. A hydraulic antivibration device comprising a rigid strength member (1) that is annular about an axis X, a rigid stud (3) coaxial with said strength member, an annular elastomer wall (5) about the axis X and capable of withstanding axial compression interposed between the strength member and the stud, a flexible and liquid-tight bellows (6) carried by the strength member and co-operating with the strength member, the stud, and the annular wall to define an enclosure, a rigid intermediate partition (7) carried by the strength member and subdividing the inside of the enclosure into two chambers, a working chamber (A) adjacent to the wall, and a compensation chamber (B) adjacent to the bellows, two passages (8 and 10) having different sections and putting the two chambers into communication with each other, a mass of liquid filling the two chambers and the passages, a shutter (11) that is rotary about the axis X and that is suitable for opening or closing at will at least the passage (10) of larger section, a tab of ferromagnetic material (16, 31, 34) that forms a portion of the rotary shutter and that is eccentric relative to the axis X, electromagnetic means housed in the periphery of the rigid intermediate partition (7) and disposed to act angularly on the tab in one direction about the axis X, resilient means (17) urging said tab angularly in the opposite direction, and slots (19) formed through the rotary shutter and suitable for co-operating with slots (20, 21) formed through the intermediate partition in such a manner as to put both chambers into communication with a decoupling valve member (22) centered on the axis X and mounted to move within the intermediate partition, the antivibration device being characterized in that the electromagnetic means comprise two small electromagnets (14, 26 ; 15, 27) eccentric relative to the axis X, and two magnetic circuits that are looped by the tab (16, 31, 34) via two respective gaps (e1, e2) disposed angularly on either side of said tab, in that the resilient means (17) are disposed to urge the tab constantly towards a middle angular position in which the widths of the two gaps are equal, and in that the slots (19) formed through the shutter are disposed in such a manner that the above communication with the decoupling valve member (22) is established while the larger section constricted passage is closed, and, on the contrary, is interrupted when said passage is opened.

2. A device according to claim 1, characterized in that the annular wall (5) is generally frustoconical in appearance.

3. A device according to claim 1 or 2, characterized in that the two electromagnets (26, 27) are angularly juxtaposed one against the other with an interposed plate of ferromagnetic material (28), and in that the end of each electromagnet furthest from the other electromagnet is juxtaposed with a respective end plate of ferromagnetic material (28, 29) that overhangs slightly in such a manner that the assembly comprising the electromagnets and the plates forms a U-shape encompassing the tab (31, 34), the gaps being located between said tab and the legs of the U-shape as embodied by the overhanging portions (32, 33) of the end plates.

4. A device according to claim 3, characterized in that the rotary shutter (11) is a disk that is extended at its periphery by a cylindrical rim including at least one shutter member (12, 121) suitable for moving past the opening (13) of one of the constricted passages (8, 10) hollowed out in the periphery of the intermediate partition (7), and in that the tab of ferromagnetic material is constituted by a cylindrically arcuate portion (31) fitted to the edge of the disk.

5. A device according to claim 3, characterized in that the rotary shutter is a disk (35) having at least one slot formed therein suitable for passing over the opening of one of the constricted passages, and in that the tab of ferromagnetic material is a flat radial extension (34) of said disk and in the form of a circular section.

6. A device according to any one of claims 3 to 5, characterized in that the angular extent of the tab (31, 34) lies in the range 60° to 90°.

7. A device according to any preceding claim, characterized in that the set of electromagnetic means is located between two circular cylinders about the axis X having respective diameters lying in the range 40 mm to 80 mm and in the range 80 mm to 120 mm.

8. A device according to any preceding claim, characterized in that the coils of the two electromagnets (14, 26; 15, 27) are connected in series with respective rectifiers (36, 37) and in that they are fed with electricity from a DC source (39) via a double reversing switch (38).

FIG.1.

FIG.2.

FIG.3.

FIG.5.

FIG.4.

FIG.6.